# EUROPEAN PATENT APPLICATION

(11) **EP 3 552 919 A1**
(43) Date of publication of application: **16.10.2019**
(21) Application number: 18166793.2
(22) Date of filing: 11.04.2018
(51) Int. Cl.: B61L 15/00, B61K 13/00, E01B 37/00, E01H 11/00, A01D 34/68

(54) **A WEED CONTROL VEHICLE**

(71) Applicant: Bayer AG, 51373 Leverkusen (DE)
(72) Inventor: JIMENEZ TARODO, Sergio, 40591 Düsseldorf (DE); KILIAN, Michael, 51379 Leverkusen (DE); HADLOW, James, CB8 9DJ Newmarket (GB); GIRAUD, Virginie, 69130 Ecully (FR); ARIANS, Thomas, 41569 Rommerskirchen (DE)
(74) Representative: BIP Patents

(57) **Abstract**

The present invention relates to a weed control vehicle (10). It is described to acquire (210) sensor data relating to at least one location of an environment using at least one sensor of the vehicle. The sensor data is provided (220) to a processing unit of the vehicle. The processing unit determines (230) a distance sensing result for each location of the at least one location. The processing unit controls (240) at least one actuator to move at least one boom of the vehicle. At least one weed control unit is attached to the at least one boom. The processing unit controls the at least one actuator to move the at least one boom on the basis of the distance sensing result for each location of the at least one location.

## Description

### FIELD OF THE INVENTION

The present invention relates to a weed control vehicle, and to a method of controlling weeds with a vehicle, as well as to a computer program element and a computer readable medium.

### BACKGROUND OF THE INVENTION

The general background of this invention is weed control. Certain industrial areas and areas around railway tracks need to have the vegetation controlled. For railways, such control improves visibility from the perspective of people on the train such as the driver and improves visibility from the perspective of people working on the tracks. Such control can lead to improved safety. Additionally, vegetation can disrupt or damage tracks and associated signaling and communication lines. Control of the vegetation is then required to mitigate this. Vegetation control, also called weed control, can be very time and resource consuming, especially if carried out manually. The environment where weeds are to be controlled can pose difficulties, having changing ground levels, banks and embankments.

### SUMMARY OF THE INVENTION

It would be advantageous to have improved weed control technology.

The object of the present invention is solved with the subject matter of the independent claims, wherein further embodiments are incorporated in the dependent claims. It should be noted that the following described aspects and examples of the invention apply also for the weed control vehicle, the method of controlling weeds with a vehicle, and for the computer program element and the computer readable medium.

According to a first aspect, there is provided a weed control vehicle, comprising:
- at least one boom;
- at least one weed control unit;
- at least one actuator;
- at least one sensor; and
- a processing unit.

The at least one boom is movably attached to the vehicle. The at least one weed control unit is attached to the at least one boom. The at least one actuator is configured to move the at least one boom under the control of the processing unit. The at least one sensor is configured to acquire sensor data relating to at least one location of an environment. The at least one sensor is configured to provide the sensor data to the processing unit. The processing unit is configured to determine a distance sensing result for each location of the at least one location. The processing unit is configured to control the at least one actuator to move the at least one boom on the basis of the distance sensing result for each location of the at least one location.

In this way, a distance between weed control units and the ground can be maintained at a required distance (or over a required range of distances) in order that weed control units can operate in an optimum manner to control weeds.

In an example, the processing unit is configured to move the at least one boom vertically on the basis of the distance sensing result for each location of the at least one location.

In an example, the processing unit is configured to determine at least one vertical distance between the at least one boom and the ground.

In an example, the processing unit is configured to move a boom in a direction comprising an upward vertical component when a distance of the at least one distance associated with the boom has a magnitude that is equal to or below a low vertical threshold value.

In this way, when a boom carrying weed control units comes too close to the ground it is moved away from the ground in order that the correct distance or range of distances between the weed control units and the ground is maintained.

In an example, the processing unit is configured to move a boom in a direction comprising a downward vertical component when a distance of the at least one distance associated with the boom has a magnitude that is equal to or greater than a high vertical threshold value.

In this way, when a boom carrying weed control units moves too far away from the ground it is moved toward the ground in order that the correct distance or range of distances between the weed control units and the ground is maintained.

In an example, the high vertical threshold is a distance magnitude that is greater than a distance magnitude of the low vertical threshold.

In this way, the boom is not constantly being moved and/or hunting does not occur, and the boom is only moved when necessary. This leads to less energy being used, and the system parts do not wear out as quickly because the actuators are only activated when necessary.

In an example, the processing unit is configured to move the at least one boom horizontally on the basis of the distance sensing result for each location of the at least one location.

In this manner, as the vehicle goes through narrow regions or wider regions the booms can extend laterally in order to control weeds over the ground, and the booms do not become snagged on outlying terrain features and areas that should be controlled for weeds are not missed.

In an example, the processing unit is configured to determine at least one horizontal distance between at least one end boom of the at least one boom and an area surrounding the vehicle.

In an example, the processing unit is configured to move a boom of the at least one end boom in a direction comprising an inward horizontal component when a distance of the at least one horizontal distance associated with the boom has a magnitude that is equal to or below a low horizontal threshold value.

In an example, the processing unit is configured to move a boom of the at least one end boom in a direction comprising an outward horizontal component when a distance of the at least one horizontal distance associated with the boom has a magnitude that is equal to or greater than a high horizontal threshold value unless the boom is already in a fully extended state.

In an example, the high horizontal threshold is a distance magnitude that is greater than a distance magnitude of the low horizontal threshold.

In this way, the boom is not constantly being moved and/or hunting does not occur, and the boom is only moved when necessary. This leads to less energy being used, and the system parts do not wear out as quickly because the actuators are only activated when necessary.

In an example, the at least one sensor comprises one or more of: a lidar sensor, a parallax laser rangefinder sensor; a stereo vision sensor; an IR reflectance sensor; a time of flight sensor; an ultrasonic sensor; a radar sensor.

In an example, with respect to a forward movement direction of the vehicle, the at least one sensor is positioned forward of the at least one boom.

In this way, the terrain ahead of the boom can be interrogated and lag in the system can be accounted for where the boom height can better account for the terrain features.

According to a second aspect, there is provided a method of controlling weeds with a vehicle, comprising:
a) acquiring sensor data relating to at least one location of an environment using at least one sensor of a vehicle;
b) providing the sensor data to a processing unit of the vehicle;
c) determining by the processing unit a distance sensing result for each location of the at least one location; and
d) controlling by the processing unit at least one actuator to move at least one boom of the vehicle, wherein at least one weed control unit is attached to the at least one boom, and wherein the processing unit controls the at least one actuator to move the at least one boom on the basis of the distance sensing result for each location of the at least one location.

According to another aspect, there is provided a computer program element for controlling parts of the vehicle of the first aspect, which when executed by a processor is configured to carry out the method of the second aspect.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a weed control vehicle;
Fig. 2 shows a method of controlling weeds with a vehicle;
Fig. 3 shows a schematic set up of an example of a number of weed control units; and
Fig. 4 shows a schematic set up of a detailed example of weed control vehicle.

### DETAILED DESCRIPTION OF EMBODIMENTS

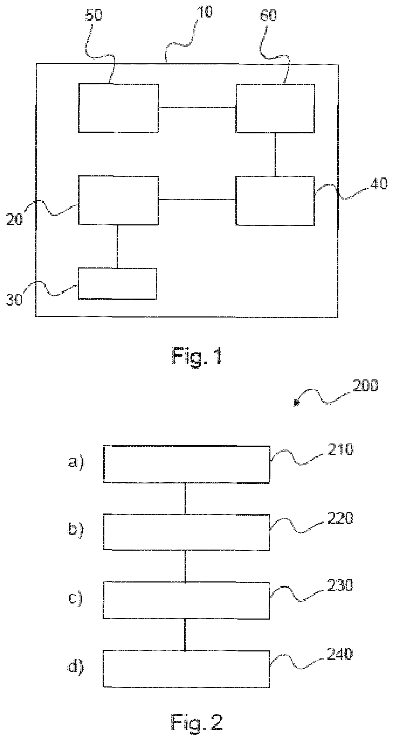

Fig. 1 shows an example of a weed control vehicle 10. The vehicle 10 comprises at least one boom 20, at least one weed control unit 30, at least one actuator 40, at least one sensor 50, and a processing unit 60. The at least one boom 20 is movably attached to the vehicle 10. The at least one weed control unit 30 is attached to the at least one boom 20. The at least one actuator 40 is configured to move the at least one boom 20 under the control of the processing unit 60. The at least one sensor 50 is configured to acquire sensor data relating to at least one location of an environment. The at least one sensor 50 is configured to provide the sensor data to the processing unit 60. The processing unit 60 is configured to determine a distance sensing result for each location of the at least one location. The processing unit 60 is configured to control the at least one actuator 40 to move the at least one boom 20 on the basis of the distance sensing result for each location of the at least one location.

In an example, the at least one weed control unit comprises at least one electrode based weed control unit. In an example, the at least one weed control unit comprises at least one chemical spray unit.

According to an example, the processing unit is configured to move the at least one boom vertically on the basis of the distance sensing result for each location of the at least one location.

According to an example, the processing unit is configured to determine at least one vertical distance between the at least one boom and the ground.

According to an example, the processing unit is configured to move a boom (of the at least one boom) in a direction comprising an upward vertical component when a distance of the at least one distance associated with the boom has a magnitude that is equal to or below a low vertical threshold value.

According to an example, the processing unit is configured to move a boom in a direction comprising a downward vertical component when a distance of the at least one distance associated with the boom has a magnitude that is equal to or greater than a high vertical threshold value.

According to an example, the high vertical threshold is a distance magnitude that is greater than a distance magnitude of the low vertical threshold.

According to an example, the processing unit is configured to move the at least one boom horizontally on the basis of the distance sensing result for each location of the at least one location.

According to an example, the processing unit is configured to determine at least one horizontal distance between at least one end boom of the at least one boom and an area surrounding the vehicle.

According to an example, the processing unit is configured to move a boom of the at least one end boom in a direction comprising an inward horizontal component when a distance of the at least one horizontal distance associated with the boom has a magnitude that is equal to or below a low horizontal threshold value.

According to an example, the processing unit is configured to move a boom of the at least one end boom in a direction comprising an outward horizontal component when a distance of the at least one horizontal distance associated with the boom has a magnitude that is equal to or greater than a high horizontal threshold value unless the boom is already in a fully extended state.

According to an example, the high horizontal threshold is a distance magnitude that is greater than a distance magnitude of the low horizontal threshold.

In an example, the processing unit is configured to move the at least one boom in a direction perpendicular to at least one long axis of the at least one boom on the basis of the distance sensing result for each location of the at least one location.

In an example, the processing unit is configured to determine at least one distance between the at least one boom and the ground that is perpendicular to the at least one long axis of the at least one boom.

In an example, the processing unit is configured to move a boom in a direction comprising a component perpendicular to a long axis of the boom when a distance of the at least one distance associated with the boom has a magnitude that is equal to or below a low threshold value.

In this way, when a boom carrying weed control units comes too close to the ground it is moved away from the ground in order that the correct distance or range of distances between the weed control units and the ground is maintained, even when the ground is not horizontally orientated.

In an example, the processing unit is configured to move a boom in a direction comprising a component perpendicular to a long axis of the boom when a distance of the at least one distance associated with the boom has a magnitude that is equal to or greater than a high threshold value.

In this way, when a boom carrying weed control units moves too far away from the ground it is moved toward the ground in order that the correct distance or range of distances between the weed control units and the ground is maintained, even when the ground is not horizontally orientated.

In an example, the high threshold is a distance magnitude that is greater than a distance magnitude of the low threshold.

According to an example, the at least one sensor comprises one or more of: a lidar sensor, a parallax laser rangefinder sensor; a stereo vision sensor; an IR reflectance sensor; a time of flight sensor; an ultrasonic sensor; a radar sensor.

According to an example, with respect to a forward movement direction of the vehicle, the at least one sensor is positioned forward of the at least one boom.

Fig. 2 shows a method 200 of controlling weeds with a vehicle in its basic steps. The method 200 comprises:
in an acquiring step 210, also referred to as step a), acquiring sensor data relating to at least one location of an environment using at least one sensor of a vehicle;
in a providing step 220, also referred to as step b), providing the sensor data to a processing unit of the vehicle;
in a determining step 230, also referred to as step c), determining by the processing unit a distance sensing result for each location of the at least one location; and
in a controlling step 240, also referred to as step d), controlling by the processing unit at least one actuator to move at least one boom of the vehicle, wherein at least one weed control unit is attached to the at least one boom, and wherein the processing unit controls the at least one actuator to move the at least one boom on the basis of the distance sensing result for each location of the at least one location.

In an example, the at least one weed control unit comprises at least one electrode based weed control unit. In an example, the at least one weed control unit comprises at least one chemical spray unit.

In an example, step d) comprises moving the at least one boom vertically on the basis of the distance sensing result for each location of the at least one location.

In an example, step c) comprises determining at least one vertical distance between the at least one boom and the ground.

In an example, step d) comprises moving a boom in a direction having an upward vertical component when a distance of the at least one distance associated with the boom has a magnitude that is equal to or below a low vertical threshold value.

In an example, step d) comprises moving a boom in a direction having a downward vertical component when a distance of the at least one distance associated with the boom has a magnitude that is equal to or greater than a high vertical threshold value.

In an example, the high vertical threshold is a distance magnitude that is greater than a distance magnitude of the low vertical threshold.

In an example, step d) comprises moving the at least one boom horizontally on the basis of the distance sensing result for each location of the at least one location.

In an example, step c) comprises determining at least one horizontal distance between at least one end boom of the at least one boom and an area surrounding the vehicle.

In an example, step d) comprises moving a boom of the at least one end boom in a direction comprising an inward horizontal component when a distance of the at least one horizontal distance associated with the boom has a magnitude that is equal to or below a low horizontal threshold value.

In an example, step d) comprises moving a boom of the at least one end boom in a direction comprising an outward horizontal component when a distance of the at least one horizontal distance associated with the boom has a magnitude that is equal to or greater than a high horizontal threshold value unless the boom is already in a fully extended state.

In an example, the high horizontal threshold is a distance magnitude that is greater than a distance magnitude of the low horizontal threshold.

In an example, the at least one sensor comprises one or more of: a lidar sensor, a parallax laser rangefinder sensor; a stereo vision sensor; an IR reflectance sensor; a time of flight sensor; an ultrasonic sensor; a radar sensor.

In an example, with respect to a forward movement direction of the vehicle, the at least one sensor is positioned forward of the at least one boom.

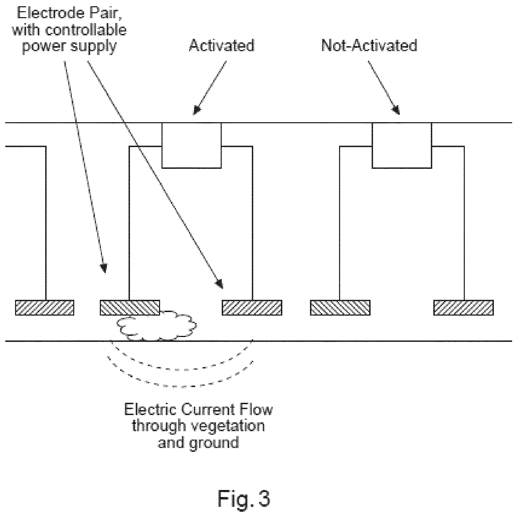

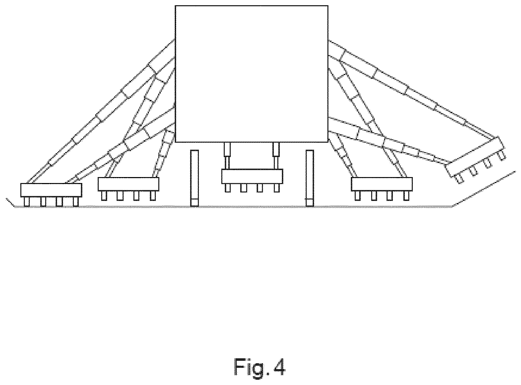

The weed control vehicle and method of controlling weeds with a vehicle are now explained in more detail with reference to Figs. 3 and 4.

Fig. 3 shows an example of a number of weed control units in the form or pairs of high voltage electrodes, where other examples of weed control units includes spray units that can spray a weed control chemical. Continuing with Fig. 3 pairs of electrodes are provided to form the individual electrode based weed control units. When an electrode pair is activated electric current flows from one electrode to the other via the weed and the ground including the weed's root. One sub-unit shown can have one electrode pair or indeed have a number of electrode pairs in order to provide for greater resolution and a smaller spatial extent of the application of such high voltage based weed control. The high voltage can be applied in a DC mode for a period of time or in an AC mode for a period of time. The electrodes have flexible end parts, not shown, in the form of metal tape or wires that form a flexible near ground surface contact with the ground.

Fig. 4 shows a detailed example of a weed control vehicle, in the form of a weed control train. A rear view of the train is shown, with the train running down a railway track. Weeds are to be controlled in the area between the railway tracks and up the sides of the railway tracks and even up adjacent banks and up to the edge of surrounding vegetation such as trees/shrubs or steep banks or walls for example. To control the weeds, a number of weed control units in the form of electrode based weed control units are used, as shown in Fig. 3. However, alternatively weed control units in the forms of chemical spray units or guns could be used that spray herbicides. However, returning to Fig. 4, the electrode based weed control units are mounted on booms. A number of actuators can move the booms up and down, and sideways and also incline the booms in order to follow the ground contour. The actuators are under the control of a processing unit (not shown), and are telescopically extendible and contractible; however other types of movement actuators can be utilised. The electrode based weed control units have some tolerance to a change in ground level, but for larger changes in level the units must be moved to follow the contours, and the units must be move sideways in order to cover the full width that can be covered and that also is within the geometrical constraints of the surroundings. Therefore, the movable booms can maintain a correct position between the electrode based weed control units and the ground, in order that electric current can be applied through weeds and the ground, and thus the weed roots, in order to kill the weeds. Similarly, when the weed control units are spray guns, they have an optimum working distance between the nozzle and the ground/vegetation and such spray guns mounted on movable booms can be moved with respect to the ground in the same manner as that explained for the electrode based weed control units.

Continuing with Fig. 4, the weed control train has a GPS unit that determines where the train is, which can be augmented by image processing derived information and/or movement based information provided from knowledge of the speed of the train and/or using inertial navigation based sensors. Thus, as any point in time the processing unit of the weed control trains knows over what part of the ground the electrode based weed control units are located. Therefore, if necessary a prior scan of the railway track can determine where weeds or areas of weeds are located, and log GPS coordinates. These coordinates can then be used by the processing unit to activate the electrodes of one or more weed control units to kill the weeds, and as such electrodes only need to be activated where necessary.

As discussed above, Fig. 4 shows the rear of the train with the train moving away from the viewer whilst controlling weeds. Each boom has a sensor that is used to determine a distance between the boom and the ground underneath the boom. The sensors are actually placed on arms attached to the booms that place the sensors ahead of the weed control units. Thus, a distance to the ground can be determined prior to arrival of a weed control unit, because of movement of the train, enabling the actuators to move the boom in order that the weed control units are at the correct height when they encounter each part of the ground. The end booms also have a sideways facing distance sensor, and a forwards facing distance sensor. In this way the booms can be moved outwards or inwards, as necessary to cover all the necessary ground. The distance sensing data is passed to the processing unit that controls the actuators to move the booms and weed control units as required.

In Fig. 4, one set of booms is shown. However, the weed control train can have more than one set of booms, for example another set of booms with weed control units that are positioned upstream of the booms shown in Fig. 4. This means that, for example if booms on the right hand side of the train are fully extended to cover a wide area of the railway area another set of booms can then cover the ground area that is closer to the train on that side.

As discussed above, the GPS coordinates of weeds can be provided to the weed control train that then uses its own GPS unit to activate weeds where required. However, the weed control train of Fig. 4 has a number of cameras that are forward of the booms, and that are imaging the ground. The images are provided to the processing unit, which processes the images to determine if weeds are present, and if so their location on the ground can be determined. Then a short time later, as the train has moved forward such that the booms are located at that position and have been moved under the control of the processing unit, to account for variations in ground level and even moved to better kill a weed, the processing unit activates appropriate pairs of electrodes and even just one electrode pair if necessary in order to kill the weed. The image analysis can determine a weed type, and this can be used to change the current and/or voltage being applied in order to account for the different weed types encountered. This ensures that easy to kill weeds can be controlled with a lower power setting than more difficult to control weeds.

Regarding the image processing to determine if weeds are present, the processing unit analyses an image to determine the areas within the image where vegetation is to be found. Vegetation can be detected based on the shape of features within acquired images, where for example edge detection software is used to delineate the outer perimeter of objects and the outer perimeter of features within the outer perimeter of the object itself. A database of vegetation imagery can be used in helping determine if a feature in imagery relates to vegetation or not, using for example a trained machine learning algorithm such as an artificial neural network or decision tree analysis. The camera can acquire multi-spectral imagery, with imagery having information relating to the colour within images, and this can be used alone, or in combination with feature detection to determine where in an image vegetation is to be found.

With respect to the machine learning analyser, images of specific weeds are acquired, with information also relating to the size of weeds being used. Information relating to a geographical location in the world, where such a weed is to be found and information relating to a time of year when that weed is to be found, including when in flower etc. can be tagged with the imagery. The names of the weeds can also be tagged with the imagery of the weeds. The machine learning analyser, which can be based on an artificial neural network or a decision tree analyser, is then trained on this ground truth acquired imagery. In this way, when a new image of vegetation is presented to the analyser, where such an image can have an associated time stamp such as time of year and a geographical location such as Germany or South Africa tagged to it, the analyser determines the specific type of weed that is in the image through a comparison of imagery of a weed found in the new image with imagery of different weeds it has been trained on, where the size of weeds, and where and when they grow can also be taken into account. The specific location of that weed type on the ground within the environment, and its size, can therefore be determined.

The processor has access to a database containing different weed types, and the optimum mode of the electrode based weed control technology to be used in controlling that weed type, which has been compiled from experimentally determined data.

Because the weed control train is itself determining from acquired imagery the location and types of weed, the exact geographical location of the weed is then not then required to be determined. Rather, on the basis of a relative spacing between the cameras and the electrode based weed control units mounted on the booms, along with knowledge of the forward motion of the weed control train (its speed), once a weed is located and identified at a later time the electrode based weed control units can be activated at that location. This is similar to how the distance information of the booms from the ground is used, in order to move the booms to take into account changes in the ground terrain below and to the sides of the train. Thus for example, if the total processing time and priming electrode based weed control units for activation takes 0.2s, 0.4s, or 0.8s for a train travelling at 25m/s, the cameras must be spaced forward of the electrode based weed control units by 5m, 10m or 20m for this train velocity. A reduction in train velocity enables the separation to be reduced. In addition, the cameras that are acquiring the imagery can have very short exposure times in order that image smear due to movement of the train during the exposure time is minimized. This can be by various means, including the use of cameras with short exposure times or short pulsed illumination via for example lasers or LEDs in combination with filters for example. However, the train can use a GPS system and/or inertial navigation system and/or image analysis to determine an exact geographical location of weeds, and booms with the electrode based weed control units can have associated location determining means, such as a GPS system and/or inertial navigation system and/or image based system that can be used to provide the exact position of the units. Thus, a front carriage of a train can have the cameras that acquire imagery from which weeds can be identified and located along with GPS data, then a rear carriage of a train that could be many tens or hundreds of metres behind the front carriage can have the booms with the weed control units mounted on them. Then, the electrode based weed control units can be activated at the correct positions again using GPS data, even if the train becomes shorter or longer due to going up or down hill.

The above detailed examples have been discussed with respect to a railway, however a weed control train, a truck or lorry or Unimog can have electrode based weed control units mounted on/within it that can use sensors to enable the weed control units to be positioned optimally with respect to the ground and use sensors in order to activate the weed control units where required on the basis of image processing.

### Image processing to enable analysis to determine a weed type

A specific example of how an image is processed, and determined to be suitable for image processing in order that a type of weed can be determined is now described:
1. A digital image - in particular a colored image - of a weed is captured.
2. Areas with a predefined color and texture within the digital image are contoured within a boundary contour. Typically, one may expect one contoured area from one weed plant. However, there may also be more than one contoured area from different, potentially not connected leafs, from two weed plants, or the like. - Such a detection or determining process detects boundaries of green areas of the digital image. During this process at least one contoured area - e.g., one or more leafs, as well as one or more weed plants - may be built comprising pixels relating to the weed within a boundary contour. However, it may also be possible, that the digital image has captured more than one leaf and/or the stem. Consequently, more than one contoured area may be determined.
3. Determining if the boundary contour covers a large enough area, and determining a sharpness (e.g. degree of focus) of the image data within the boundary contour. This firstly ensures that there will be sufficient image data upon which a determination can be made as to the type of weed, and secondly determines that a minimum quality of the digital image will be satisfied in order that the type of weed can be made.
4. If both criteria in 3) are satisfied, the digital image, and specifically that within the boundary contour is sent to the processing unit for image analysis by the artificial neural network to determine the type of weed as described above.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A weed control vehicle (10), comprising:
- at least one boom (20);
- at least one weed control unit (30);
- at least one actuator (40);
- at least one sensor (50); and
- a processing unit (60);
wherein, the at least one boom is movably attached to the vehicle;
wherein, the at least one weed control unit is attached to the at least one boom;
wherein, the at least one actuator is configured to move the at least one boom under the control of the processing unit;
wherein, the at least one sensor is configured to acquire sensor data relating to at least one location of an environment;
wherein, the at least one sensor is configured to provide the sensor data to the processing unit;
wherein, the processing unit is configured to determine a distance sensing result for each location of the at least one location; and
wherein, the processing unit is configured to control the at least one actuator to move the at least one boom on the basis of the distance sensing result for each location of the at least one location.

2. Weed control vehicle according to claim 1, wherein the processing unit is configured to move the at least one boom vertically on the basis of the distance sensing result for each location of the at least one location.

3. Weed control vehicle according to claim 2, wherein the processing unit is configured to determine at least one vertical distance between the at least one boom and the ground.

4. Weed control vehicle according to claim 3, wherein the processing unit is configured to move a boom in a direction comprising an upward vertical component when a distance of the at least one distance associated with the boom has a magnitude that is equal to or below a low vertical threshold value.

5. Weed control vehicle according to any of claims 3-4, wherein the processing unit is configured to move a boom in a direction comprising a downward vertical component when a distance of the at least one distance associated with the boom has a magnitude that is equal to or greater than a high vertical threshold value.

6. Weed control vehicle according to claim 5 when dependent upon claim 4, wherein the high vertical threshold is a distance magnitude that is greater than a distance magnitude of the low vertical threshold.

7. Weed control vehicle according to any of claims 1-6, wherein the processing unit is configured to move the at least one boom horizontally on the basis of the distance sensing result for each location of the at least one location.

8. Weed control vehicle according to claim 7, wherein the processing unit is configured to determine at least one horizontal distance between at least one end boom of the at least one boom and an area surrounding the vehicle.

9. Weed control vehicle according to claim 8, wherein the processing unit is configured to move a boom of the at least one end boom in a direction comprising an inward horizontal component when a distance of the at least one horizontal distance associated with the boom has a magnitude that is equal to or below a low horizontal threshold value.

10. Weed control vehicle according to any of claims 8-9, wherein the processing unit is configured to move a boom of the at least one end boom in a direction comprising an outward horizontal component when a distance of the at least one horizontal distance associated with the boom has a magnitude that is equal to or greater than a high horizontal threshold value unless the boom is already in a fully extended state.

11. Weed control vehicle according to claim 10 when dependent upon claim 9, wherein the high horizontal threshold is a distance magnitude that is greater than a distance magnitude of the low horizontal threshold.

12. Weed control vehicle according to any of claims 1-11, wherein the at least one sensor comprises one or more of: a lidar sensor, a parallax laser rangefinder sensor; a stereo vision sensor; an IR reflectance sensor; a time of flight sensor; an ultrasonic sensor; a radar sensor.

13. Weed control vehicle according to any of claims 1-12, wherein with respect to a forward movement direction of the vehicle, the at least one sensor is positioned forward of the at least one boom.

14. An method (200) of controlling weeds with a vehicle, comprising:
a) acquiring (210) sensor data relating to at least one location of an environment using at least one sensor of a vehicle;
b) providing (220) the sensor data to a processing unit of the vehicle;
c) determining (230) by the processing unit a distance sensing result for each location of the at least one location; and
d) controlling (240) by the processing unit at least one actuator to move at least one boom of the vehicle, wherein at least one weed control unit is attached to the at least one boom, and wherein the processing unit controls the at least one actuator to move the at least one boom on the basis of the distance sensing result for each location of the at least one location.

15. A computer program element for controlling at least one actuator to move at least one boom of a vehicle according to any of claims 1 to 13, which when executed by a processor is configured to carry out the method of claim 14.
